Europäisches Patentamt

European Patent Office

Office européen des brevets

(11) Veröffentlichungsnummer: **0 226 899**
A2

# (12) EUROPÄISCHE PATENTANMELDUNG

(21) Anmeldenummer: 86116831.8

(22) Anmeldetag: 03.12.86

(51) Int. Cl.⁴: **B 60 C 27/06**
**B 60 C 27/14**

(30) Priorität: 20.12.85 DE 3545528

(43) Veröffentlichungstag der Anmeldung:
01.07.87 Patentblatt 87/27

(84) Benannte Vertragsstaaten:
AT BE CH DE ES FR GB GR IT LI LU NL SE

(71) Anmelder: AUTOTYP S.A.
Case Postale 53
CH-1037 Etagnières(CH)

(72) Erfinder: Ilon, Bengt Erland
Schädrütihalde 4
CH-6006 Luzern(CH)

(74) Vertreter: Rottmann, Maximilian R.
c/o Rottmann, Quehl & Zimmermann AG Glattalstrasse
37
CH-8052 Zürich(CH)

(54) Rutschsicherungsvorrichtung für Fahrzeugräder.

(57) Ein Rutschsicherungsvorrichtung (1) für Fahrzeugräder, welche einen Mittelteil (2), mehrere davon ausgehende Arme (3a-3d), eine auf den Armen (3a-3d) angebrachte Schneekette (4) und eine Einziehvorrichtung (5) aufweist, um die Rutschsicherungsvorrichtung (1) aus einer Montagelage in eine Funktionslage einzuziehen. Um sicherzustellen, daß die Arme (3a-3d) nicht gegen Radkästen und sonstige Fahrzeugteile anstoßen, und außerdem sicherzustellen, daß die Arme nicht beeinflußt werden, dadurch, daß Außenseiten des Radreifens (10) ausbauchen, weist jeder Arm einen Übergangsteil (32) auf, der, wenn die Rutschsicherungsvorrichtung (1) ihre Funktionslage auf dem Fahrzeugrad (7) einnimmt, sich außerhalb der Felge (8) befindet und sich der Felge nähert, wodurch ein auf dem Mittelteil (2) angeordneter Lagerungsteil (30) über den Übergangsteil (32) in einen bedeutend näher dem Fahrzeugrad (7) als der Lagerungsteil (30) verlaufenden Außenteil (33) übergeht, welcher sich längs der Außenseite (11) des Radreifens (10) in einem Abstand (A) von solchen Teilen (38) der Außenseite (11) erstreckt, die sich bei Belastung des Radreifens (10) ausbauchen.

Fig. 1

8611683l.8
0226899

- ℥ -

∧

## Rutschsicherungsvorrichtung für Fahrzeugräder

Die Erfindung betrifft eine Rutschsicherungsvorrichtung für Fahrzeugräder, welche einen Mittelteil, mehrere von diesem Teil ausgehende Arme, eine auf den Armen angebrachte Schneekette und eine Einziehvorrichtung aufweist, die dazu dient, die Rutschsicherungsvorrichtung aus einer Montagelage in eine Funktionslage einzuziehen, in welcher der Mittelteil und die Arme außerhalb einer Stirnseite des Fahrzeugrades liegen, die Einziehvorrichtung an die Felge des Fahrzeugrades gekuppelt ist, um die Rutschsicherungsvorrichtung in Richtung auf das Fahrzeugrad zu zu belasten, die Schneekette rund um die Umfangslauffläche eines Fahrzeugradreifens läuft und sich jeder Arm von dem Mittelteil nach außen gegen die Reifenlauffläche erstreckt und dabei längs der Felge und einer Stirnseite des Reifens verläuft.

Bei Rutschsicherungsvorrichtungen der eingangs angegebenen Art ist es wichtig, daß sich der Mittelteil in einem wesentlichen Abstand von der Felge befindet, wenn die Rutschsicherungsvorrichtung ihre Funktionslage auf

- 6 -

dem Rad einnimmt. Hierdurch wird nämlich ein hinreichender Platz für die zwischen dem Mittelteil und
der Felge angebrachte Einziehvorrichtung geschaffen.
Die vom Mittelteil ausgehenden Arme dürfen dagegen
nicht zu weit weg vom Fahrzeugrad verlaufen, da dabei
die Gefahr besteht, daß die Arme gegen den Radkasten
des Fahrzeugs anstoßen.

Eine zweite Forderung ist, daß die Arme auch nicht so
nahe an der Außenseite des Reifens verlaufen, daß derjenige Teil des Reifens, der sich beim Fahren ausbaucht,
gegen die Arme anstößt.

Eine dritte Forderung ist, daß die Arme außerdem im
allgemeinen einen Lagerungsteil aufweisen, welcher
derart ausgebildet und angeordnet ist, daß sich die
Arme im Verhältnis zum Mittelteil verschieben lassen.

Der Erfindung liegt die Aufgabe zugrunde, bei der eingangs angegebenen Rutschsicherungsvorrichtung in erster
Linie zu bewirken, daß die Arme nicht am Radkasten des
Fahrzeugs anstoßen, daß sich ausbauchende Teile der
Reifenaußenseite nicht an den Armen anstoßen können
und daß die Arme vorzugsweise einen Lagerungsteil aufweisen, der in den Mittelteil verschiebbar eingreift.
Diese Aufgabe wird im wesentlichen durch die im Anspruch 1 angegebenen Merkmale gelöst.

Die Unteransprüche betreffen vorteilhafte Ausgestaltungen der Erfindung.

Die Erfindung ist nachfolgend anhand der Zeichnungen
näher beschrieben.Es zeigen

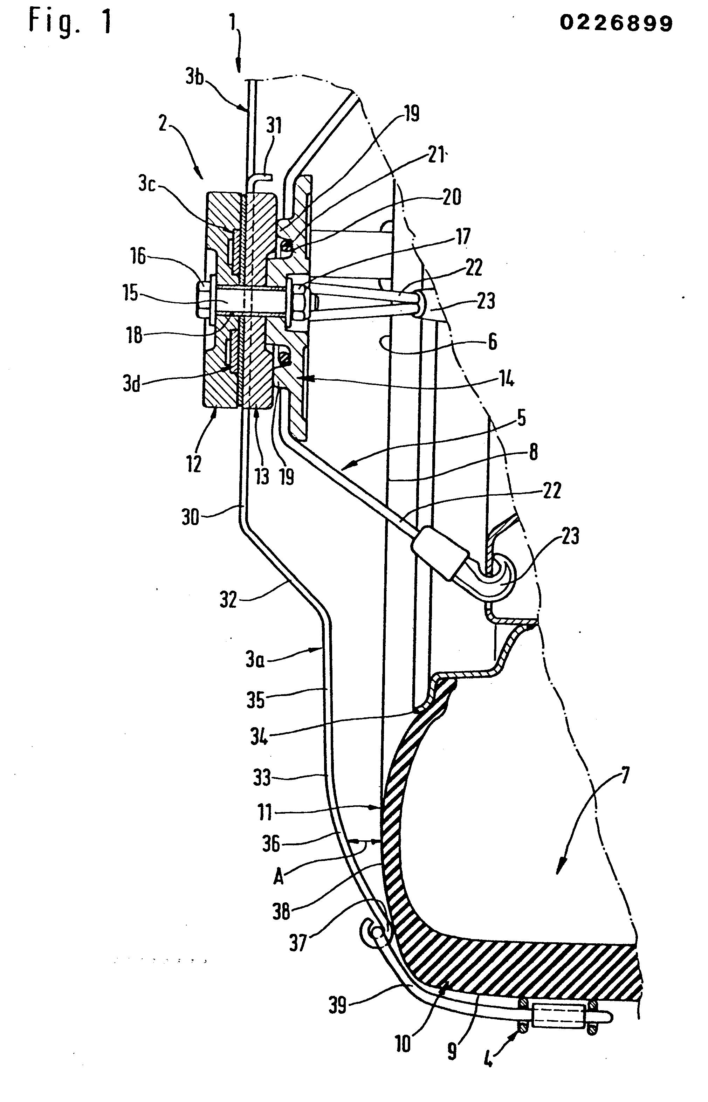

Fig. 1  einen Schnitt durch Teile der erfindungsgemäßen Rutschsicherungsvorrichtung,

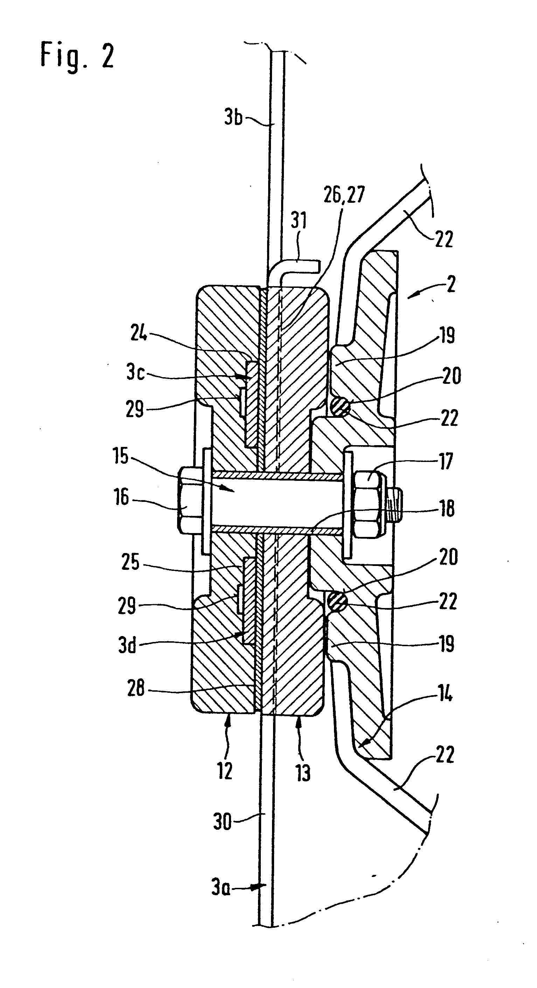

Fig. 2  einen Schnitt durch den Mittelteil der Rutschsicherungsvorrichtung,

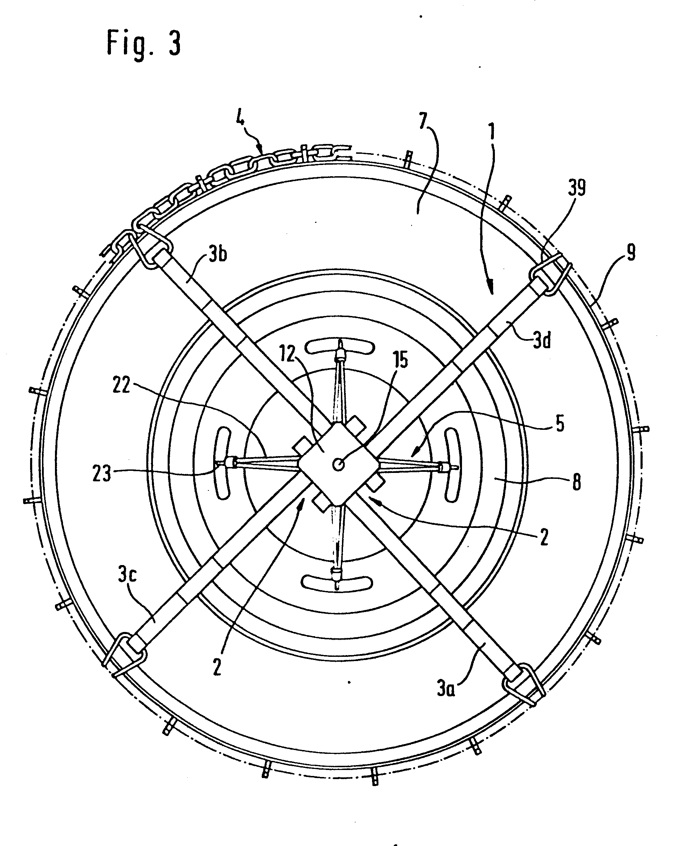

Fig. 3  eine Seitenansicht einer erfindungsgemäßen
Rutschsicherungsvorrichtung, in der Funktionslage an einem Fahrzeugrad angebracht,

Fig. 4  eine perspektivische Ansicht der erfindungsgemäßen Rutschsicherungsvorrichtung in einer
Montagelage an einem Fahrzeugrad angebracht,

Fig. 5  eine perspektivische Ansicht der erfindungsgemäßen Rutschsicherungsvorrichtung aus der
Montagelage in die Funktionslage auf dem Fahrzeugrad eingezogen, und

Fig. 6  eine perspektivische Ansicht der erfindungsgemäßen Rutschsicherungsvorrichtung in zusammengeklapptem Zustand.

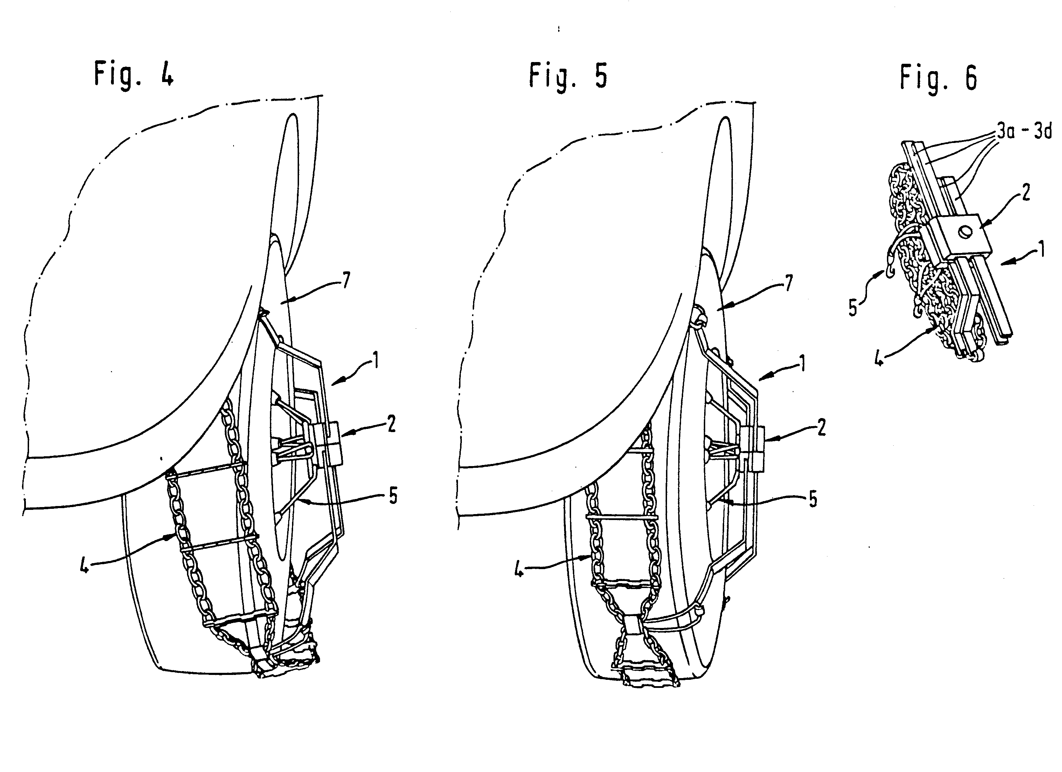

Die in der Zeichnung dargestellte Rutschsicherungsvorrichtung 1 weist einen Mittelteil 2, vier von ihm ausgehende Arme 3a-3d, eine auf den Armen angeordnete Schneekette 4 und eine Einziehvorrichtung 5 auf, die dazu
dient, die Rutschsicherungsvorrichtung aus einer Montagelage M (siehe Fig. 4) in eine Funktionslage F (siehe
Fig. 5) einzuziehen, in welcher Lage einerseits der
Mittelteil 2 und die Arme 3a-3d außerhalb einer Stirnseite 6 des Fahrzeugrades 7 liegen und andrerseits die
Einziehvorrichtung 5 an die Felge 8 des Fahrzeugrades 7
gekuppelt ist, um die Rutschsicherungsvorrichtung 1 in
Richtung auf das Fahrzeugrad 7 zu zu belasten, so daß sie

die Rutschsicherungsvorrichtung aus deren Montagelage
M in deren Funktionslage F beim Umlauf des Rades einzieht. In der Funktionslage F verläuft die Schneekette
4 rund um die Umfangslauffläche 9 des Reifens 10 des
Fahrzeugrades 7 und jeder Arm 3a-3d erstreckt sich vom
Mittelteil 2 nach außen gegen die Lauffläche 9 des
Reifens 10 und läuft dabei längs der Felge 8 und einer
Außenseite 11 des Reifens 10.

Der Mittelteil 2 weist einen ersten, zweiten und dritten Lagerungsteil 12, 13 bzw. 14 auf, und diese Teile
sind im Verhältnis zueinander auf einer Achse 15 drehbar gelagert, die aus einem Bolzen 16 mit einer Mutter
17 und einer auf den Bolzen 16 aufgesteckten Hülse 18
besteht, welche gleich lang wie oder etwas länger ist
als diejenigen Partien sämtlicher drei Lagerungsteile
12-14, die auf der Hülse 18 gelagert sind. Es wird hierdurch sichergestellt, daß die Bewegung zwischen den Lagerungsteilen 12-14 nicht gehindert werden kann, wenn
die Mutter 17 angezogen wird.

Der dritte Lagerungsteil 14 ist als Halterung für die
Einziehvorrichtung 5 vorgesehen. Zu diesem Zweck weist
dieser Lagerungsteil 14 vier Erhöhungen auf, die gegen
den zweiten Lagerungsteil 13 gerichtet sind, jedoch
in einem kleinen Abstand von ihm enden, um nicht der
Drehung zwischen den Lagerungsteilen 13 und 14 entgegenzuwirken. Jede Erhöhung 19 bildet auf ihrer Innenseite
eine Nut 20, durch die ein ösenförmiger Teil 21 eins
zu der Einziehvorrichtung 5 gehörenden Riemens 22 aus
elastischem Material, vorzugsweise Gummimaterial, läuft.
Der Riemen 20 weist ein Einhakglied 23 auf, welches an
der Felge 8 des Fahrzeugrades 7 festgehakt ist, und der
Riemen 20 ist ausgedehnt, wenn er festgehakt ist.

Der erste Lagerungsteil 12 weist zwei parallel verlaufende Nuten 24, 25 für zwei in entgegengesetzten
Richtungen vom Mittelteil 2 ausgehende Arme 3c und
3d auf. Der zweite Lagerungsteil 13 weist zwei parallel verlaufende Nuten 26, 27 für zwei in entgegengesetzten Richtungen vom Mittelteil 2 ausgehende Arme
3a und 3b auf. Damit die Arme 3c, 3d des ersten Lagerungsteils 12 nicht mit den Armen 3a, 3b des zweiten
Lagerungsteils 13 in Berührung kommen, ist zwischen
diesen Lagerungsteilen 12 und 13 ein Teller 18 vorgesehen. Jede Nut 24-27 weist eine längsverlaufende
Rinne 29 auf, damit Wasser, Schnee und Eis und/oder
Schmutz aus den Nuten 24-27 heraustreten kann.

Jeder Arm 3a-3d weist einen Lagerungsteil 30 auf,
mittels dessen der Arm in den jeweiligen Nuten 24-27
verschiebbar gelagert ist.

Der Lagerungsteil 30 hat einen außerhalb des Mittelteils 2 liegenden Anschlage 31, welcher verhindern soll,
daß der Lagerungsteil 30 aus seiner jeweiligen Nut
24-27 herausgezogen wird.

Der Lagerungsteil 30 ist gerade und schließt sich an
einen Übergangsteil 32 an, welcher außerhalb der Felge
8 liegt und derart schräggestellt ist, daß er sich,
in Richtung nach außen gegen den Reifen 10 gesehen,
der Felge nähert. Der Übergangsteil 32 geht seinerseits, in Richtung nach außen gegen den Reifen 10 gesehen, in einen Außenteil 33 über, bevor der betreffende Arm 3a-3d die Außenkante 34 der Felge 8 passiert.
Der Außenteil 33 befindet sich aufgrund der Ausbildung des Übergangsteils 32 bedeutend näher dem Fahrzeugrad 7 als der Lagerungsteil 30 und weist einen
hauptsächlich geraden, an den Übergangsteil 32 sich
anschließenden Abschnitt 35 auf, der in einen bogenförmigen Abschnitt 36 übergeht, welcher seinerseits einen Anlageteil 37 aufweist, mittels dessen der betreffende Arm 3a-3d an der Außenseite 11 des Reifens 10 in der Nähe von dessen Lauffläche 9 anliegt.

Der bogenförmige Abschnitt 36 des Außenteils 33 ist derart ausgebildet, daß der Außenteil 33 in einem Abstand A von solchen Teilen 38 der Reifenaußenseite 11 verlaufen wird, die sich ausbauchen, wenn der Reifen belastet wird, indem er auf einer Oberfläche (Fahrbahn) steht. Dank dem Umstand, daß der Außenteil 33 dem Fahrzeugrad 7 wesentlich näher liegt als der Lagerungsteil 30, wird sichergestellt, daß der Außenteil 33 nicht an einem Radkasten oder anderen Teilen des Fahrzeugs anstoßen kann, und dank dem Umstand, daß es einen Abstand A zwischen dem Außenteil 33 und den einer Ausbauchung ausgesetzten Teilen 38 der Reifenaußenseite 11 gibt, wird sichergestellt, daß der Reifen 10 nicht auf die Arme 3a-3d und somit nicht auf die Rutschsicherungsvorrichtung 1 in einer ungünstigen Weise einwirken kann, wenn die genannten Teile 38 sich ausbauchen.

Der Anlageteil 37 des betreffenden Armes 3a-3d ist umgebogen und weist einen drehbar gelagerten Bügel 39 auf, der entlang der Lauffläche 9 verläuft und die Schneekette 4 hält.

Der Mittelteil kann zwei, drei oder mehr Arme aufeisen, auch wenn vier Arme gewöhnlich vorzuziehen sind. Die Einziehvorrichtung kann eine andere zweckmäßige Anzahl Riemen als vier aufweisen und der dem Fahrzeugrad sukzessive sich nähernde Übergangsteil der Arme kann gerade oder bogenförmig sein, ebenso wie der bogenförmige Abschnitt des Außenteils gerade sein kann.

0226899

P A T E N T A N S P R Ü C H E

1. Rutschsicherungsvorrichtung für Fahrzeugräder, welche Vorrichtung einen Mittelteil, mehrere von ihm ausgehende Arme, eine auf den Armen angebrachte Schneekette und eine Einziehvorrichtung aufweist, die dazu dient, die Vorrichtung aus einer Montagelage in eine Funktionslage einzuziehen, in welcher der Mittelteil und die Arme außerhalb einer Stirnseite des Fahrzeugrads liegen, die Einziehvorrichtung an die Felge des Fahrzeugrads gekuppelt ist, um die Rutschsicherungsvorrichtung in Richtung auf das Fahrzeugrad zu zu belasten, die Schneekette rund um die Umfangslauffläche des Reifens des Fahrzeugrads läuft und sich jeder Arm vom Mittelteil nach außen gegen die Lauffläche des Radreifens erstreckt und dabei längs der Felge und einer Außenseite des Radreifens läuft, dadurch gekennzeichnet, daß jeder Arm einen Übergangsteil (32) aufweist, der, wenn die Rutschsicherungsvorrichtung (1) ihre Funktionslage auf dem Fahrzeugrad (7) einnimmt, sich außerhalb der Felge (8) befindet und sich dieser nähert, wodurch ein auf dem Mittelteil (2) vorgesehener Lagerungsteil (30) über den Übergangsteil (32) in einen bedeutend näher dem Fahrzeugrad (7) als der Lagerungsteil (30) verlaufenden Außenteil (33) übergeht, welcher sich längs der Außenseite (11) des Radreifens (10) in einem Abstand (A) von solchen Teilen (38) der Außenseite (11) erstrecken, die bei Belastung des Radreifens (10) ausbauchen.

0226899

2. Vorrichtung nach Anspruch 1, dadurch gekennzeichnet, daß der Außenteil (33) des Armes (3a-3d) über einen Anlageteil (37) an der Außenseite (11) des Radreifens (10) in der Nähe der Lauffläche (9) desselben anliegt, wenn die Rutschsicherungsvorrichtung (1) ihre Funktionslage auf dem Fahrzeugrad (7) einnimmt.

3. Vorrichtung nach Anspruch 2, dadurch gekennzeichnet, daß der Außenteil (33) des Armes (3a-3d) in Richtung auf einen an der Außenseiten des Radreifens (10) anliegenden Anlageteil (37), einen Abschnitt (36) aufweist, der sich der Außenseite (11) des Radreifens (10) sukzessive nähert, wenn die Rutschsicherungsvorrichtung (1) ihre Funktionslage auf dem Fahrzeugrad (7) einnimmt.

4. Vorrichtung nach einem der vorhergehenden Ansprüche, dadurch gekennzeichnet, daß zumindest einer der Arme (3a-3d) längsverschiebbar in einem zum Mittelteil (2) gehörenden ersten Lagerungsteil (12) gelagert ist und daß zumindest ein anderer der Arme (3a-3d) längsverschiebbar in einem zum Mittelteil (2) gehörenden zweiten Lagerungsteil (13) gelagert ist, wobei die Einziehvorrichtung (5) an einem zum Mittelteil (2) gehörenden dritten Lagerungsteil (14) vorgesehen ist, und daß alle drei Lagerungsteile (12, 13 und 14) gegenseitig drehbar auf einer Achse (15) gelagert sind.

5. Vorrichtung nach Anspruch 4, dadurch gekennzeichnet, daß der dritte zum Mittelteil (2) gehörende Lagerungsteil (14) mehrere gegen den zweiten zum Mittelteil (2) gehörende Lagerungsteile (13) gerichtete Erhöhungen (19) aufweist und daß ein aus elastischem Material bestehender Riemen (22) der Einziehvorrichtung (5) durch eine von jeder Erhöhung (19) gebildete Nut (20) läuft, wodurch der Riemen (22) an dem Mittelteil (2) festgehalten wird.

6. Vorrichtung nach Anspruch 5, dadurch gekennzeichnet, daß der Riemen (22) ein Einhakglied (23) zum Festhaken des Riemens (22) an der Felge (8) des Fahrzeugrades (7) aufweist.

7. Vorrichtung nach Anspruch 4, 5 oder 6, dadurch gekennzeichnet, daß der erste zum Mittelteil (2) gehörende Lagerungsteil (12) zwei parallele Nuten (24,25) aufweist, in denen zwei in entgegengesetzten Richtungen vom Mittelteil (2) ausgehende Arme (3c und 3d) verschiebbar gelagert sind, und daß der zweite Lagerungsteil (13) des Mittelteils (2) zwei parallele Nuten (26,27) aufweist, in denen zwei in entgegengesetzten Richtungen vom Mittelteil (2) ausgehende Arme (3a und 3b) verschiebbar gelagert sind.

8. Vorrichtung nach einem der Ansprüche 4 bis 7, dadurch gekennzeichnet, daß die Arme (3c,3d) im ersten Lagerungsteil (12) des Mittelteils (2) mittels eines zwischen dem ersten und dem zweiten Lagerungsteil (12,13) angeordneten Tellers (28) von den Armen (3a,3b) des zweiten Lagerungsteils (13) getrennt sind.

9. Vorrichtung nach einem der Ansprüche 4 bis 8, dadurch gekennzeichnet, daß die Nuten (24-27) in den für die Arme (3a-3d) vorgesehenen Lagerungsteilen (12,13) des Mittelteils (2) längsverlaufende Rinnen (29) aufweisen.

10. Vorrichtung nach einem der vorhergehenden Ansprüche dadurch gekennzeichnet, daß jeder Arm (3a-3d) von im wesentlichen rechteckigem Querschnitt ist und einen geraden Lagerungsteil (30) aufweist, welcher einen außerhalb des Mittelteils (2) liegenden Anschlag (31) hat, wobei der an den Lagerungsteil (30) sich anschließende Übergangsteil (32) gegen die Felge (8) gerichtet ist, wenn die Rutschsicherungsvorrichtung (1) ihre Funktionslage auf dem Fahrzeugrad (7) einnimmt und wobei der Übergangsteil (32) in den Außenteil (33) übergeht, bevor der Arm (3a-3d) an einer Außenkante (34) der Felge (8) vorbeiläuft.

Fig. 1

Fig. 2

Fig. 3

Fig. 4

Fig. 5

Fig. 6

0226899